# DEMANDE DE BREVET EUROPEEN

(11) **EP 0 749 694 A1**
(43) Date de publication de la demande: **27.12.1996**
(21) Numéro de dépôt: 95201668.1
(22) Date de dépôt: 20.06.1995
(51) Int. Cl.: A23G 1/00, A23G 1/02

(54) **Traitement enzymatique du cacao**

(71) Demandeur: SOCIETE DES PRODUITS NESTLE S.A., 1800 Vevey (CH)
(72) Inventeur: Hansen, Carl Erik, CH-1066 Epalinges (CH); Klueppel, Anthony, Dublin, Ohio 43017 (CH); Raetz, Eric, CH-1018 Lausanne (CH)

(57) **Abrégé**

Procédé de traitement d'un grué ou d'une liqueur de cacao, dans lequel on prépare un grué ou une liqueur de fèves de cacao fermentées 1 à 15 jours, on le mélange à au moins une protéase dans un milieu aqueux pH 3-8, et on incube le mélange pendant un temps et une température suffisante pour obtenir au moins 10µmol d'acides aminés hydrophobes par g de matière sèche et au moins 1,4 fois plus de peptides par rapport à ceux présents dans les fèves de cacao fermentées.

## Description

L'invention concerne un procédé de traitement enzymatique d'un grué ou d'une liqueur de cacao pour en améliorer la composition en précurseurs d'arôme, et permettant d'utiliser une large gamme de fèves de cacao dans divers états de fermentation.

### Etat de la technique

La qualité d'un chocolat est directement influencée par la provenance géographique et génétique, et les conditions de traitement des fèves de cacao, depuis leur culture en champs jusqu'à leur transformation en usine. Les fèves de cacao une fois récoltées sont ainsi soumises dans leur pays d'origine à une fermentation et à un séchage naturel qui sont destinés à faire apparaître les précurseurs d'arôme. Malheureusement, la récolte à maturité des fèves et les conditions de leur fermentation ne sont pas toujours contrôlés d'une manière adéquate. De plus, les trois types principaux de cacaoyers de l'espèce *Theobroma cacao*, appelés Criollo, Forastero et Trinitario, produisent chacun des fèves ayant une composition différente. Enfin, les fèves séchées peuvent être aussi abîmées au cours de leur transport jusque dans les pays spécialisés dans la transformation des fèves. L'industrie doit donc faire face à une grande variabilité de composition des lots de fèves de cacao (voir par exemple Smaffer M., The Manufacturing Confectioner, 92-94, Jun 1994).

Les fèves de cacao fermentées et séchées sont ensuite traditionnellement débarrassées de leur enveloppe. Elles sont soumises à un concassage plus ou moins poussé, puis à une torréfaction, combinée le cas échéant avec une alcalinisation, qui sont destinées à faire apparaître l'arôme et la couleur du cacao. L'étape de torréfaction fait en effet intervenir des réactions de Maillard entre les sucres réducteurs et les produits de dégradation des protéines, notamment les acides aminés et les peptides (Wood and Lass, Cocoa, Longman Scientific& Technical, Longman Group UK, England, 1985, ISBN 0-582-46352-1).

Les précurseurs d'arôme apparaissent seulement lors de la fermentation naturelle des fèves, du fait de réactions d'hydrolyses. Des expériences d'incubation *in-vitro* de fèves ou de fragments de fèves de cacao non fermentées ont ainsi montré que ces réactions d'hydrolyses sont dépendantes du pH, de la température et de la compartimentation des enzymes et des substrats dans la fève. De plus les réactions d'hydrolyses sont aussi sensibles à la présence de polyphénols. Il est ainsi avantageux d'extraire à l'acétone les polyphénols des fèves, et aussi d'incuber lesdites fèves dans l'acide acétique pour décloisonner les enzymes et les substrats (Biehl B. et al., J. Sci. Food. Agric., 33, 1280-1290, 1982).

De plus, d'autres travaux ont montré que les fèves de cacao comprennent au moins trois activités protéolytiques impliquées dans l'apparition des précurseurs d'arôme de cacao, à savoir une endoprotéase ayant une activité optimale à pH 3,5, une carboxypeptidase ayant une activité optimale à pH 5,8, et une aminopeptidase ayant une activité optimale à pH 7. Des expériences d'hydrolyse de la globuline de fèves de cacao purifiée (protéine présentant sur gel de chromatographie SDS-PAGE deux bandes de 31kD et 47kD), dont les polyphénols ont été extraits, avec des protéases commerciales et/ou l'endoprotéase et la carboxypeptidase de cacao purifiées ont montré qu'il était préférable d'hydrolyser la globuline successivement par l'endoprotéase de cacao à pH 3,5, puis par la carboxypeptidase de cacao ou une carboxypeptidase commerciale à pH 5-6. De cette manière, on obtient une composition en peptides et en acides aminés qui est adéquate pour retrouver un arôme de cacao lors d'une torréfaction subséquente du mélange en présence de sucres réducteurs (Voigt J. et al., Food Chemistry, 50, 177-184, 1994).

Par ailleurs, US2965490 décrit un procédé d'hydrolyse *in-vitro* de fèves de cacao non-fermentées (fèves vertes) destiné à remplacer la fermentation naturelle des fèves. A cet effet, on hydrolyse à l'acide ou enzymatiquement les protéines de fèves de cacao vertes, on hydrolyse enzymatiquement les carbohydrates desdites fèves pour produire des sucres simples, et on fait réagir les deux hydrolysats dans des conditions anhydres à une température et pendant un temps suffisant pour produire un facteur aromatique. Cependant, il faut signaler que les polyphénols des graines vertes limitent particulièrement l'hydrolyse enzymatique des protéines de réserve (voir l'exemple comparatif 1 ci-après).

En définitive, les procédés et travaux décrits ci-dessus ont manifestement pour intention de remplacer la fermentation naturelle des fèves de cacao par une hydrolyse enzymatique contrôlée des fèves vertes (problème posé par les polyphénols) ou de leurs protéines purifiées (desquelles les polyphénols ont été extraits). De plus, la qualité et la quantité en précurseurs d'arôme nécessaires à la création d'un bon arôme de cacao lors d'une torréfaction ne sont pas encore connues.

### Résumé de l'invention

La présente invention a pour but de pallier la variabilité de composition en précurseurs d'arôme des fèves de cacao fermentées, et de conférer à un grué ou une liqueur de fèves de cacao fermentées une composition optimale en précurseurs d'arôme.

A cet effet dans le procédé selon la présente invention, on prépare un grué ou une liqueur de fèves de cacao fermentées 1 à 15 jours, on le mélange à au moins une protéase dans un milieu aqueux pH 3-8, et on incube le mélange pendant un temps et une température suffisante pour hydrolyser les protéines et les peptides du mélange.

De préférence, on incube le mélange pendant un temps et une température suffisante pour obtenir au moins 10µmol d'acides aminés hydrophobes par g de matière sèche et/ou au moins 1,4 fois plus de peptides par rapport à ceux présents dans les fèves de cacao fermentées.

Le présent procédé permet de renforcer l'hydrolyse des protéines de réserves des fèves de cacao, qui a eu lieu initialement lors de la fermentation naturelle des fèves, jusqu'à l'obtention de quantités suffisantes et une composition correcte en acides aminés et en peptides.

La torréfaction subséquente du mélange selon l'invention permet alors d'obtenir un bon arôme de cacao, qui peut même être plus fort ou plus concentré par rapport à celui obtenu après torréfaction de fèves de cacao fermentées traditionnellement.

On peut aussi utiliser des fèves de cacao prises à divers stades de fermentation, comme par exemple des fèves peu fermentées ne contenant pas assez de précurseurs d'arômes, des fèves trop fermentées ne contenant pas la bonne composition en précurseurs d'arômes, ou des fèves mal fermentées comme des fèves acides contenant une mauvaise composition en précurseurs d'arôme. De même, les fèves de cacao peuvent être d'origines végétales et géographiques différentes. Le présent procédé permet ainsi d'homogénéiser la composition en précurseurs d'arôme d'un mélange de fèves de provenance et de stades de fermentation différents.

De plus, l'hydrolyse d'un grué ou d'une liqueur de cacao par des enzymes techniques est surprenante du fait de leur sensibilité aux polyphénols des fèves. On a pu montrer que des fèves fermentées naturellement au moins 1 jour présentent un taux en polyphénols suffisamment bas pour que les enzymes techniques ne soient pas significativement inhibées dans le présent procédé. Par contre, des fèves vertes présentent un taux trop élevé en polyphénols pour être utilisées dans le présent procédé.

En particulier, l'ajout d'une invertase permet d'augmenter avantageusement la teneur naturelle en glucose et en fructose du mélange, ce qui favorise la formation d'arôme lors d'une torréfaction subséquente du mélange.

Enfin, l'utilisation possible de diverses enzymes techniques dans la présente invention ouvre la possibilité de créer des variants d'arôme de cacao qui peuvent être appréciées du consommateur.

### Description détaillée de l'invention

Une unité d'activité enzymatique est définie dans la suite de la description par des µmol de produit transformé par min. De même, les pourcentages sont données en poids sauf indication contraire.

L'expression "fèves de cacao peu ou pas assez fermentées" désigne des fèves fermentées traditionnellement environ 1 à 4 jours puis séchées, dont les protéines présentent par chromatographie SDS-PAGE sur gel de polyacrylamide 2 bandes visibles correspondant aux protéines de réserve 21kD et 31kD/47kD (voir WO91/00913 et WO91/00914). Par ailleurs ces fèves ne présentent pas une quantité suffisante en acides aminés et en peptides pour former un arôme de cacao lors d'une torréfaction subséquente.

L'expression "fèves de cacao bien fermentées" désigne des fèves fermentées et séchées traditionnellement environ 2 à 10 jours, et dont les protéines présentent par chromatographie SDS-PAGE sur gel de polyacrylamide une bande visible correspondant à la protéine de réserve 21kD, les deux bandes correspondant à la protéine de 31kD/47kD étant partiellement ou complètement dégradées. Par ailleurs ces fèves présentent une quantité suffisante en acides aminés et en peptides pour former un arôme de cacao lors d'une torréfaction subséquente.

L'expression "fèves de cacao trop fermentées" désigne des fèves fermentées et séchées traditionnellement environ 7 à 15 jours, dont les protéines ne présentent pas par chromatographie SDS-PAGE sur gel de polyacrylamide de bandes visibles et distinctes correspondant aux protéines de réserve 21kD et 31kD/47kD. Par ailleurs ces fèves présentent une quantité suffisante en acides aminés, mais une quantité insuffisante en peptides pour former un arôme de cacao lors d'une torréfaction subséquente.

Enfin, au sens de la présente invention un grué est obtenu par le concassage classique de fèves de cacao fermentées ou non, et une liqueur de cacao est obtenue par le broyage plus ou moins poussé desdites fèves ou du grué jusqu'à ce que le beurre de cacao soit libéré des cellules.

Pour mettre en oeuvre le présent procédé, on prépare un grué ou une liqueur de fèves de cacao fermentées 1 à 15 jours. On peut donc utiliser, en mélange ou non, des fèves de cacao prises à divers stades de fermentation, comme des fèves peu fermentées, bien fermentées, trop fermentées ou mal fermentées, par exemple. On peut aussi utiliser, en mélange ou non, des fèves de cacao provenant de divers génotypes de cacaoyers *Theobroma cacao* Criollo, Forastero et/ou Trinitario, par exemple. En particulier, on réduit les fèves de cacao à l'état d'une fine poudre de manière à ce que la surface de contact entre les protéines de réserve et la protéase soit maximale.

On mélange ensuite le grué ou la liqueur à au moins une protéase dans un milieu aqueux pH 3-8. La protéase peut être choisie seule ou en combinaison dans le groupe formé par les endoprotéases, les carboxypeptidases et les aminopeptidases, par exemple. Le pH du milieu aqueux peut être ajusté par adjonction d'un acide minéral ou organique, ou d'un tampon choisi parmi ceux couramment utilisés dans les procédés industriels alimentaires, notamment les tampons basés sur le citrate, le phosphate ou l'acétate, par exemple.

En particulier, on peut préférer un pH3-4 de manière à activer aussi les endoprotéases endogènes de la fève, cependant il est préférable de choisir en conséquence une protéase technique qui est active dans ce domaine d'acidité. De même, le mélange peut comprendre 10-70% d'un grué ou d'une liqueur de cacao, notamment 20-50%, et 1-100 unités de protéase par g de mélange, par exemple.

On peut aussi ajouter au mélange, en plus des protéases techniques, au moins une enzyme technique choisie dans le groupe formé par les invertases, les glycosidases, les cellulases, les pectinases et les oxydases, par exemple. Ces enzymes peuvent être aussi ajoutées lors d'une deuxième incubation du mélange, dans la mesure où le pH ou certains constituants du milieu seraient défavorables à leur activité, par exemple.

Pour mettre en oeuvre le présent procédé, on incube ensuite le mélange pendant un temps et une température suffisante pour hydrolyser les protéines et les peptides.

De préférence, on incube le mélange pendant un temps et une température suffisante pour obtenir au moins 10µmol d'acides aminés hydrophobes par g de matière sèche et/ou au moins 1,4 fois plus de peptides par rapport à ceux présents initialement dans les fèves de cacao fermentées. Dans ce cadre, on peut comparer la quantité de peptides identiques présents dans les grués obtenus avant et après traitement selon l'invention. On peut aussi tenir compte de l'apparition de nouveaux peptides par rapport à ceux présents dans le grué non traité selon l'invention, en se limitant toutefois à ceux qui apparaissent significativement lors de la fermentation naturelle de fèves vertes, par exemple. En particulier, on compare la quantité de quatres peptides ayant des temps de rétention, au cours de la chromatographie décrit ci-après, de 9,17, 24 et 29,5 min.

De même, on peut prendre en compte comme acides aminés hydrophobes, que ceux présents majoritairement dans le grué traité selon l'invention, en particulier la phénylalanine, la leucine et l'alanine, par exemple.

Pour obtenir une quantité suffisante d'acides aminés hydrophobes et de peptides, on peut incuber le mélange à 20-60°C pendant 30 min à 20 h, par exemple. Cependant, la température et le temps d'hydrolyse devront être choisis en fonction du milieu, le type d'enzyme, le degré de fermentation des fèves et la provenance des fèves.

Dans un mode de réalisation particulier de la présente invention, on prépare un grué ou une liqueur de fèves de cacao fermentées 1 à 15 jours, on le mélange à un milieu aqueux pH3-4, on incube le mélange à 40-60°C pendant 30 min à 20h, on ajuste le pH du mélange à pH4-8, on lui ajoute au moins une protéase, et on l'incube à 10-60°C pendant 30 min à 20h, de manière à obtenir une hydrolyse des protéines et des peptides, mais de préférence au moins 10µmol d'acides aminés hydrophobes par g de matière sèche et/ou au moins 1,4 fois plus de peptides par rapport à ceux présents dans les fèves de cacao fermentées.

On peut aussi ajouter au premier ou au deuxième mélange au moins une enzyme choisie dans le groupe formé par les invertases, les glycosidases, les cellulases, les pectinases et les oxydases.

Enfin après avoir mis en oeuvre le présent procédé, on peut conserver le mélange en inactivant les enzymes à la chaleur (80-120°C pendant 1 à 60 min) ou par un traitement sous haute pression hydrostatique (supérieur à 500000 kPa), par exemple. On peut aussi sécher le mélange par exemple par lyophilisation, par aspiration par le vide, ou par évaporation de l'eau au cours d'un chauffage modéré du mélange, puis on peut le soumettre à une torréfaction et/ou une alcalinisation classique, comme celle décrite dans EP0226727. De préférence, on sèche le mélange jusqu'à atteindre une teneur en humidité du mélange inférieure à 15%, notamment 7%.

La présente invention est décrite plus en détail ci-après à l'aide des exemples qui vont suivre. Ces exemples sont précédés d'une description de divers tests, et d'une brève présentation de la figure. Il va de soi toutefois, que ces exemples sont donnés à titre d'illustration de l'objet de l'invention dont ils ne constituent en aucune manière une limitation.

### Analyse des acides aminés

On soumet le mélange inactivé selon l'invention à un bain d'ultrasons pendant 10 min, on l'homogénéise pendant 2 fois 1 min à 9600rpm (Polytron), on le centrifuge pendant 10 min à 10000g, on récolte le surnageant, on le filtre, puis on analyse son contenu en acides aminés au moyen du Kit ACCQTag® (Waters, USA).

Pour cela, 20µl d'échantillon ou de standard est mélangé à 140µl d'un tampon borate, on ajoute 40µl d'un réactif comprenant du 6-aminoquinolyl-N-hydroxysuccinimidyl carbamate (AQC), on soumet le mélange à un vortex, on le laisse reposer à température ambiante pendant 1min, on le chauffe à 55°C pendant 7min, on l'injecte dans une colonne HPLC Reverse-Phase C18 (Nova-Pak C18, 4µm; USA), et on élue les acides aminés dérivés à 36,5°C, à un débit de 1ml/min, dans un gradient: 100% de solvant A pendant 10min, 98% de solvant A pendant 10,5min, 93% de solvant A pendant 26 min, 90% de solvant A pendant 30 min, 67% de solvant A pendant 43 min, 30% de solvant A pendant 53 min, 100% d'eau pendant 54 min et 100% d'un solvant acetonitrile/eau (65%/35%) pendant 60 min (solvant A= tampon phosphate fourni par Waters).

Les acides aminés dérivés et élués sont détectés à 395nm par un détecteur Applied Biosystem model 980. Les acides aminés du mélange sont ensuite quantifiés par rapport aux échantillons standard dérivés et élués dans les mêmes conditions.

### Analyse des peptides

On ajoute au mélange inactivé selon l'invention du méthanol jusqu'à une concentration de 70%, on ajoute 2 ml de méthanol 70% et 100mg de polyvinylpolypyrrolidone (PVPP), on laisse agir sous agitation douce 1h à température ambiante, on centrifuge 2 fois pendant 10 min à 20000g, on récolte le surnageant, on élimine le méthanol par aspiration par le vide, on ajoute 0,35ml d'eau au culot, on centrifuge la solution 5 min à 20000g, on la filtre, puis on analyse son contenu en peptides par élution sur une colonne HPLC Reverse-Phase C18 (n°218TP54 Vydac; USA) à un débit de 1ml/min dans 0,1% d'acide trifluoroacétique et 2% d'acetonotrile (dans de l'eau pendant 10 min, suivi d'un gradient linéaire comprenant 0,1% d'acide trifluoroacétique et de 2 à 52,7% d'acétonitrile pendant 50min. Les peptides élués sont détectés à 215 et 280nm.

Dans le cadre de la présente invention, on détermine l'augmentation de la quantité de peptides dans le mélange traité selon l'invention par rapport à ceux présents dans le mélange non traité, en comparant les aires des pics d'élution de quatres peptides ayant un temps de rétention de 9, 17, 24 et 29,5 min. Ces peptides sont retrouvés généralement lors de la fermentation traditionnelle de fèves de cacao des cacaoyers *Theobroma cacao* Trinitario, Criollo et Forastero. On ne peut exclure cependant que d'autres peptides puissent aussi apparaîtres lors de la fermentation traditionnelle de fèves de cacao provenant de certains génotypes particuliers de cacaoyers.

### Analyse des sucres

On incube le mélange inactivé selon l'invention pendant 30min à 60°C sous agitation, on le laisse reposer à température ambiante pendant 15-30min, on le centrifuge 2 fois à 20000g pendant 5min, on filtre le surnageant sur une cartouche Waters Sep-Pak C18, on filtre à nouveau le filtrat sur un filtre Sartorius Minisart (SRP15, n°1755K), et on détermine son contenu en glucose par la méthode spectrophotométrique "God-Perid" à l'aide du lut n°124028 de Boehringer-Mannheim (Allemagne)

On inactive à la chaleur le grué ou la liqueur hydrolysé selon l'invention, on le sèche par évaporation de l'eau sous un chauffage modéré (<100°C) jusqu'à ce que la teneur en humidité soit inférieure à 10%, puis on le torrifie dans un four à 120°C pendant 15 min. Les arômes générés par la torréfaction sont alors évalués par l'odorat d'un panel de 20 personnes. Les grués présentant un arôme semblable à celui obtenu par la torréfaction classique d'un grué de fèves de *Theobroma cacao* Criollo, Forastero ou Trinitario fermentées 4-8 jours ont été retenus.

### Figure 1:

représentation de la quantité de glucose produit par une invertase dans un mélange d'eau et de grué de fèves de cacao vertes, selon le temps de traitement et en fonction de la quantité d'invertase ajoutée.

### Exemple comparatif 1

On prépare classiquement un grué de fèves de cacao vertes de *Theobroma cacao* Trinitario ICS-95, on mélange à 1 ml d'un tampon 200mM citrate pH4, 100mg dudit grué et le cas échéant 100mg de PVPP qui forme un complexe avec les polyphénols. On incube le mélange pendant 2h à 50°C, on ajuste son pH avec 1 ml d'un tampon 200mM citrate pH7, on lui ajoute le cas échéant 40µl de carboxypeptidase A (0,06 unités/µl, Sigma), on l'incube à 25°C pendant 1h, puis on stoppe la réaction en chauffant le mélange à 95°C, pendant 5 min

On analyse ensuite le degré d'hydrolyse des protéines de cacao en déterminant au moyen des méthodes décrites ci-dessus la teneur en acides antinés libres dans les grué traités, et les aires des pics d'élution de quatres peptides dans le grué initial et les grués traités (peptides associés à la fermentation naturelle des fèves).

Les résultats présentés au tableau 1 ci-dessous montrent qu'une autolyse du grué à pH4 et à pH7 ne permet pas d'obtenir une augmentation significative en précurseurs d'arômes par rapport à ceux présents initialement dans les fèves vertes. Par contre une autolyse à pH4 du grué comprenant du PVPP, suivie d'une hydrolyse enzymatique des protéines à pH7 permet d'obtenir une augmentation significative des précurseurs d'arôme. Les polyphénols des fèves vertes ont donc un effet inhibiteur important.

**Tableau 1**

| Traitement enzymatique | Addition de PVPP | Acides aminés (µmol/g sec) | | Aires des peptides (unités arbitraires) | | | |
|---|---|---|---|---|---|---|---|
| | | Total | Hydrophobe | Peptide 1 | Peptide 2 | Peptide 3 | Peptide 4 |
| non | - | 15,9 | 2,5 | 604 | 551 | 716 | - |
| oui | - | 26,8 | 8,3 | 695 | 1224 | 696 | - |
| oui | + | 34,9 | 12,1 | 1559 | 2847 | 2854 | 1804 |
| (Le temps de rétention des peptides 1 à 4 est respectivement de 9, 17, 24 et 29,5 min) | | | | | | | |

### Example comparatif 2

On prépare classiquement des grués de fèves de cacao de *Theobroma cacao* Trinitario ICS-95 qui ont été traditionnellement fermentées pendant 1, 2, 3, 4, 5 et 7 jours, puis séchées. On analyse ensuite le degré d'hydrolyse des protéines des grués en déterminant au moyen de la méthode décrite ci-dessus les aires des pics d'élution de quatres peptides dans les grués fermentés (peptides associés à la fermentation naturelle des fèves). Les résultats sont présentés dans le tableau 2 ci-après.

L'analyse des protéines des grués par chromatographie SDS-PAGE sur gel de polyacrylamide, montre une dégradation intense des bandes de 31kD et 47kD pour les fèves fermentées au moins 3 jours. Par contre, la bande de 21kD n'est pas dégradée pour les fèves fermentées 1 à 7 jours.

On torréfie à 120°C pendant 15 min dans un four les différents grués. L'analyse sensorielle de l'arôme délivré par les grués montrent qu'une fermentation des fèves de 3 jours est suffisante pour obtenir un arôme de cacao.

### Exemple 1

On prépare classiquement des grués de fèves de cacao de *Theobroma cacao* Trinitario ICS-95 qui ont été traditionnellement fermentées pendant 1, 2, 3, 4, 5 et 7 jours, puis séchées. On mélange ensuite à 100mg de chaque type de grué 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse ensuite le degré d'hydrolyse des protéines de cacao en déterminant au moyen des méthodes décrites ci-dessus la teneur en acides aminés libres et les aires des pics d'élution de quatres peptides majoritaires des grués (peptides associés à la fermentation naturelle des fèves).

Les résultats présentés dans le tableau 2 montrent que l'on peut augmenter au moins 1,4 fois la teneur en peptides dans un grué provenant de fèves de cacao peu ou bien fermentées De plus, la teneur en acides aminés hydrophobes de tous les grués traités et des grués fermentées 3 à 7 jours est toujours supérieure à 10µmol par g de matière sèche.

**Tableau 2**

| Jours de fermentation | Traitement enzymatique | Aires des peptides (unités arbitraires) | | | | Augmentation des peptides |
|---|---|---|---|---|---|---|
| | | Peptide 1 | Peptide 2 | Peptide 3 | Peptide 4 | |
| 1 | Non | 565 | 1017 | 833 | - | |
| 1 | Oui | 1181 | 2626 | 1191 | - | x 2,06 |
| 2 | Non | 1072 | 2393 | 1190 | - | |
| 2 | Oui | 1880 | 4044 | 1968 | - | x 1,70 |
| 3 | Non | 1600 | 3643 | 1595 | 170 | |
| 3 | Oui | 2083 | 5074 | 2618 | 890 | x 1,52 |
| 4 | Non | 1583 | 3444 | 1794 | 202 | |
| 4 | Oui | 3107 | 6051 | 2836 | 596 | x 1,79 |
| 5 | Non | 1663 | 3383 | 1249 | 270 | |
| 5 | Oui | 2230 | 4719 | 2486 | - | x 1,43 |
| 7 | Non | 2061 | 3971 | 1202 | 267 | |
| 7 | Oui | 2862 | 5555 | 2563 | - | x 1,46 |

### Exemple 2

On prépare classiquement des grués de fèves de cacao de *Theobroma cacao* Trinitario ICS-95 qui ont été traditionnellement fermentées pendant 1, 2, 3, 4, 5 et 7 jours, puis séchées. On mélange ensuite à 1g de chaque type de grué 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse ensuite le degré d'hydrolyse des protéines de cacao en déterminant au moyen des méthodes décrites ci-dessus la teneur en acides aminés libres et les aires des pics d'élution de quatres peptides des grués (peptides associés à la fermentation naturelle des fèves). Les résultats sont similaires à ceux obtenus à l'exemple 1.

### Exemple 3

On prépare classiquement une liqueur de fèves de cacao pas assez fermentées provenant de divers génotypes de *Theobroma caca*o. Les protéines de ces fèves présentent par chromatographie SDS-PAGE sur gel de polyacrylamide 3 bandes visibles de protéines correspondant aux protéines de réserve 21kD et 31kD/47kD.

On détermine les teneurs en acides aminés et en peptides d'une partie de la liqueur au moyen des méthodes décrites ci-dessus. On mélange ensuite à 100mg d'une partie de la liqueur 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse enfin le degré d'hydrolyse des protéines en déterminant la teneur en peptide et en acides aminés libres de la liqueur (méthodes ci-dessus).

Les résultats présentés dans le tableau 3 ci-après montre que le traitement selon l'invention permet d'augmenter significativement la teneur en précurseurs d'arôme d'une liqueur provenant d'un mélange de fèves peu fermentées.

**Tableau 3**

| Traitement enzymatique | Acides aminés (µmol/g sec) | | Aires des peptides (unités arbitraires) | | | |
|---|---|---|---|---|---|---|
| | Total | Hydrophobe | Peptide 1 | Peptide 2 | Peptide 3 | Peptide 4 |
| non | 22,2 | 7,7 | - | 1451 | 613 | - |
| oui | 35,9 | 14,7 | 771 | 2359 | 1115 | 724 |
| (Le temps de rétention des peptides 1 à 4 est respectivement de 9, 17, 24 et 29,5 min) | | | | | | |

On sèche ensuite le mélange inactivé par aspiration par le vide, on le torréfie à 120°C pendant 15 min, et on analyse l'arôme délivré par le mélange torréfié par le test sensoriel décrit ci-dessus. Les résultats montrent que les grués de fèves peu fermentées, traitées selon l'invention et torréfiées présentent un arôme intense caractéristique d'un arôme de cacao.

### Exemple 4

On prépare classiquement une liqueur de fèves de cacao trop fermentées provenant de divers génotypes de *Theobroma cacao*. Les protéines de ces fèves ne présentent pas par chromatographie SDS-PAGE sur gel de polyacrylamide de bandes visibles de protéines correspondant aux protéines de réserve 21kD et 31kD/47kD.

On détermine la teneur en acides aminés et en peptides d'une partie de la liqueur au moyen des méthodes décrites ci-dessus. On mélange ensuite à 100mg d'une partie de la liqueur 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse enfin le degré d'hydrolyse des protéines en déterminant la teneur en peptide et en acides aminés libres de la liqueur (méthodes ci-dessus).

Les résultats présentés dans le tableau 4 ci-après montre que le traitement selon l'invention permet d'augmenter significativement la teneur en précurseurs d'arôme de liqueur provenant d'un mélange de fèves trop fermentées.

**Tableau 4**

| Traitement enzymatique | Acides aminés (µmol/g sec) | | Aires des peptides (unités arbitraires) | | | |
|---|---|---|---|---|---|---|
| | Total | Hydrophobe | Peptide 1 | Peptide 2 | Peptide 3 | Peptide 4 |
| non | 49,5 | 19,2 | 960 | 2192 | 727 | - |
| oui | 59,6 | 25,8 | 2102 | 4508 | 3026 | - |
| (Le temps de rétention des peptides 1 à 4 est respectivement de 9, 17, 24 et 29,5 min) | | | | | | |

On sèche ensuite le mélange inactivé par aspiration par le vide, on le torréfie à 120°C pendant 15 min, et on analyse l'arôme délivré par le mélange torréfié par le test sensoriel décrit ci-dessus. Les résultats montrent que les grués de fèves trop fermentées, traitées selon l'invention et torréfiées présentent un arôme intense caractéristique d'un arôme de cacao.

### Exemple 5

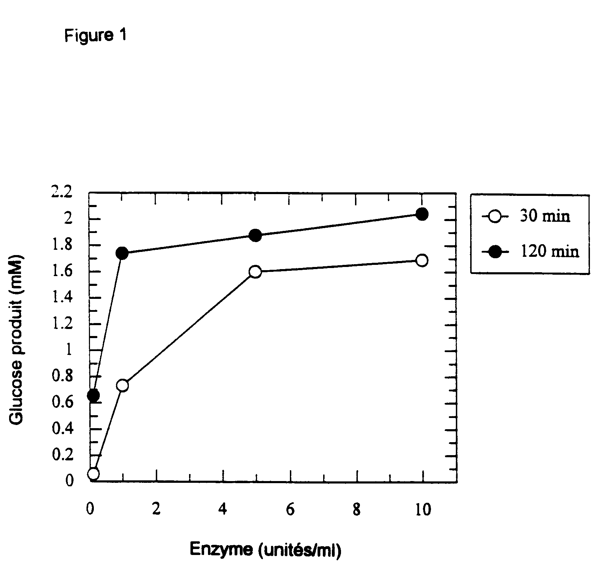

On prépare plusieurs grués de fèves de cacao fermentées traditionnellement 1 jour, on mélange 140mg de chaque grué à 100µl d'une solution aqueuse d'invertase Maxinvert L10000 (Gist Brocades) comprenant différentes unités d'activités, on incube les mélanges 30 min ou 120min, on stoppe la réaction en chauffant à 95°C pendant 1 min, et on détermine le contenu en glucose de chaque mélange au moyen de la méthode décrite ci-dessus. Les résultats présentés à la figure 3 montre que 1 unité /ml d'invertase est suffisante pour hydrolyser plus de 80% du sucrose en glucose et en fructose.

## Revendications

1. Procédé de traitement d'un grué ou d'une liqueur de cacao, dans lequel on prépare un grué ou une liqueur de fèves de cacao fermentées 1 à 15 jours, on le mélange à au moins une protéase dans un milieu aqueux pH 3-8, et on incube le mélange pendant un temps et une température suffisante pour hydrolyser les protéines et les peptides du mélange.

2. Procédé selon la revendication 1, dans lequel on incube le mélange pendant un temps et une température suffisante pour obtenir au moins 10µmol d'acides aminés hydrophobes par g de matière sèche et au moins 1,4 fois plus de peptides par rapport à ceux présents dans les fèves de cacao fermentées.

3. Procédé selon la revendication 1, dans lequel on prépare un grué ou une liqueur de fèves de cacao fermentées 1 à 15 jours, on le mélange à un milieu aqueux pH3-4, on incube le mélange à 40-60°C pendant 30 min à 20 h, on ajuste le pH du mélange à pH4-8, on lui ajoute au moins une protéase, et on l'incube à 10-60°C pendant 30 min à 20 h.

4. Procédé selon la revendication 1, dans lequel le mélange comprend 10-70% d'un grué ou d'une liqueur de fèves de cacao et 1-100 unité/g de protéase.

5. Procédé selon la revendication 1, dans lequel on ajoute au mélange au moins une protéase choisie dans le groupe formé par les endoprotéases, les carboxypeptidases et les aminopeptidases.

6. Procédé selon la revendication 1, dans lequel on ajoute en outre au mélange au moins une enzyme technique choisie dans le groupe formé par les invertases, les glycosidases, les cellulases, les pectinases et les oxydases.

7. Procédé selon la revendication 1, dans lequel le grué ou la liqueur de cacao est préparé à partir d'un mélange de fèves à divers états de fermentation et/ou provenant de divers génotypes de cacaoyer.

8. Procédé selon la revendication 7, dans lequel le grué ou la liqueur de cacao est préparé à partir de fèves de *Theobroma cacao* Criollo, Forastero et/ou Trinitario

9. Procédé selon l'une des revendications 1 à 7, dans lequel on sèche le mélange et on le torréfie.
